(19) Europäisches Patentamt
European Patent Office
Office européen des brevets

(11) **EP 1 982 142 B1**

(12) **EUROPÄISCHE PATENTSCHRIFT**

(45) Veröffentlichungstag und Bekanntmachung des Hinweises auf die Patenterteilung:
**14.10.2015 Patentblatt 2015/42**

(21) Anmeldenummer: **07701849.7**

(22) Anmeldetag: **31.01.2007**

(51) Int Cl.:
*G01C 1/02* (2006.01)     *G02B 23/16* (2006.01)

(86) Internationale Anmeldenummer:
**PCT/CH2007/000049**

(87) Internationale Veröffentlichungsnummer:
**WO 2007/090309 (16.08.2007 Gazette 2007/33)**

(54) **WINKELMESSGERAT**

ANGLE MEASURING DEVICE

RAPPORTEUR D'ANGLE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **08.02.2006 CH 1962006**

(43) Veröffentlichungstag der Anmeldung:
**22.10.2008 Patentblatt 2008/43**

(73) Patentinhaber: **Leica Geosystems AG
9435 Heerbrugg (CH)**

(72) Erfinder: **MEIER, Dietrich
CH-5015 Niedererlinsbach (CH)**

(74) Vertreter: **Kaminski Harmann
Patentanwälte AG
Landstrasse 124
9490 Vaduz (LI)**

(56) Entgegenhaltungen:
**EP-A- 0 369 416     US-A- 4 455 758**

**Beschreibung**

Die Erfindung bezieht sich auf das Gebiet der optischen Winkelmessgeräte, insbesondere auf ein Winkelmessgerät gemäss dem Oberbegriff des Patentanspruches 1.

**STAND DER TECHNIK**

Winkelmessgeräte werden beispielsweise als reine Theodoliten zur Messung von Winkeln verwendet, oder sind, kombiniert mit beispielsweise elektrooptischen Distanzmessegeräten, Teil eines Koordinatenmesssystems. Typischerweise hat in einem Theodoliten die Kippachse ein V-Lager, d.h. ein Reiblager mit zwei definierten Auflagepunkten. Das V-Lager hat aber den Nachteil, dass es nur in einer Richtung belastbar ist, was eine nicht senkrechte Aufstellung verhindert und einen motorischen Antrieb wegen der wechselnden Antriebskraftrichtung erschwert.

Andere Lager mit wenig Radialspiel sind Luftlager und verspannte Kugellager. Geräte wie Lasertracker weisen verspannte Kugellager auf Während Luftlager umständlich und gross sind, haben die verspannten Kugellager den Nachteil, dass die Kugeln nicht mehr ideal rollen, da sie durch die Forderung nach minimalem radialem Ablagefehler sehr stark verspannt werden müssen. Der Einfluss der Temperatur auf die Vorspannung, je nach Materialwahl, bringt weitere Komplikationen.

Die EP 0 369 416 und die US 4 455 758 zeigen Winkelmessgeräte nach dem Stand der Technik.

**DARSTELLUNG DER ERFINDUNG**

Es ist deshalb Aufgabe der Erfindung, ein Winkelmessgerät der eingangs genannten Art zu schaffen, welche die oben genannten Nachteile der Achslagerung behebt.

Diese Aufgabe löst ein Winkelmessgerät mit den Merkmalen des Patentanspruches 1.

Das Winkelmessgerät zur optischen Winkelmessung weist also einen um mindestens eine Achse drehbar gelagerten Fernrohrkörper mit Winkelencoder auf. Der Fernrohrkörper kann mit einem Zielfernrohr, einer elektronischen Kamera, laseroptischen Entfernungsmessern etc. allgemein bekannter Art ausgestattet sein. Dabei ist die Achse an mindestens zwei Lagerstellen drehbar gelagert, und sind diese Lagerstellen in Richtung der Achse voneinander beabstandet. Es sind mindestens zwei Sensoranordnungen zur Erfassung der genauen Lage der Achse jeweils an einer Messstelle entlang der Achse angeordnet, wobei die Messstellen in Richtung der Achse voneinander beabstandet sind. Mindestens eine der Sensoranordnungen weist eine Gruppe von kapazitiven Sensoren auf, welche an der Messstelle eine Verschiebung der Achse in Richtungen senkrecht zur Achsrichtung erfassen.

Damit ist es möglich, mit einer normalen, das heisst, einer nicht besonders starken Verspannung der Kugellager zu arbeiten. So ist ein leichtes Abrollen der Kugeln an jeweils diametral entgegengesetzten Punkten der Kugeloberfläche gewährleistet.

Ein Punkt auf der Achse kann sich dabei durch Lagerungenauigkeiten in einer Ebene senkrecht zur Achsrichtung bewegen. Diese Bewegung wird durch die Sensoranordnungen jeweils an einer Messstelle erfasst. Da zwei Messstellen vorliegen, ist die Lage respektive die Verschiebung von zwei Punkten der Achse und damit auch die Lage der verschobenen Achse als Ganzes bekannt. Diese Lage wird bei der Berechnung der Blickrichtung des Fernrohrkörpers respektive der darin angeordneten Fernrohre und/oder Distanzmesser berücksichtigt (nebst dem in üblicher Weise ermittelten Drehwinkel um ein oder zwei Achsen mittels Winkelencoder). Das heisst, dass die Blickrichtung des Fernrohrkörpers einerseits aus den Drehungen um die Achsen bestimmt wird, und andererseits eine Korrektur entsprechend der erfindungsgemäss bestimmten Lage der Achse durchgeführt wird. Weitere Korrekturen der Gerätegeometrie aufgrund von beispielsweise Temperaturmessungen können in bekannter Weise durchgeführt werden.

In einer bevorzugten Ausführungsform der Erfindung weist jede der Sensoranordnungen ein erstes Sensorpaar und ein zweites Sensorpaar mit jeweils zwei kapazitiven Sensoren auf, wobei das erste Sensorpaar eine Verschiebung der Achse in eine erste Richtung orthogonal zur Achsrichtung misst, das zweite Sensorpaar eine Verschiebung der Achse in eine zweite Richtung orthogonal zur Achsrichtung misst, und die erste und die zweite Richtung im wesentlichen orthogonal zueinander sind. Durch die orthogonale Ausrichtung der Sensorpaare zueinander sind die Lagebestimmungen in die beiden Richtungen voneinander entkoppelt.

Es ist alternativ aber auch möglich, mehr oder weniger Sensoren zu verwenden: Beispielsweise kann nur ein einzelner Sensor oder ein einzelnes Sensorpaar eingesetzt werden, um die Verschiebung der Achse in nur einer Richtung zu messen. Oder es werden drei Sensoren in einer Dreiecksanordnung um die Achse herum angeordnet, und die Verschiebung der Achse wird in den zwei Richtungen aus der Gesamtheit der drei Sensorkapazitäten ermittelt. Auch können fünf oder sechs Sensoren verwendet werden. Die ausführlich vorgestellte Variante mit zwei orthogonalen Sensorpaaren ist aber von der Auswertung her besonders einfach.

In einer weiteren bevorzugten Ausführungsform der Erfindung ist in mindestens einer der Sensoranordnungen jeweils ein erster Sensor des ersten Sensorpaares und ein erster Sensor des zweiten Sensorpaares auf einem ersten Sensorelement-Träger angeordnet sind, und ist jeweils ein zweiter Sensor des ersten Sensorpaares und ein zweiter Sensor des zweiten Sensorpaares auf einem zweiten Sensorelement-Träger angeordnet. Dies macht es möglich, jeweils zwei Sensoren auf die Lage der Achse hin zu justieren, wobei die Justierung von zwei Sensoren eines Paares jeweils unabhängig voneinander passiert. Da die zwei Sensoren auf demselben Träger orthogonal zueinander stehen, ist ihre Stellung bezüglich der Achse durch Verschieben des Trägers ebenfalls im wesentlichen unabhängig voneinander einstellbar.

In einer weiteren bevorzugten Ausführungsform der Erfindung bilden die Sensoren jeweils zwischen der Achse und einer Elektrode eine Kapazität nach Massgabe des Abstandes zwischen der Achse und der Elektrode. Dabei ist vorzugsweise die Achse elektrisch gesehen auf Masse gelegt. Dadurch kann die Beschaltung und Auswertung der Sensorkapazitäten besonders einfach gestaltet werden.

Die erfindungsgemässe Messvorrichtung kann bei mehreren Achsen eines Winkelmessgerätes, insbesondere sowohl bei einer Kippachse (oder Zenitachse) und/oder bei einer Stehachse (oder Azimutachse) eingesetzt werden.

In einer bevorzugten Ausführungsform der Erfindung weist das Winkelmessgerät eine elektronische Schaltung auf, welche für mindestens eines der Sensorpaare zur Erzeugung eines ersten Signals nach Massgabe der Kapazität des ersten Sensors und eines zweiten Signals nach Massgabe der Kapazität des zweiten Sensors sowie zur Bildung eines Differenzsignals aus dem ersten und dem zweiten Signal ausgebildet ist. Damit ist das Differenzsignal ein Mass für die Verschiebung der Achse in der Richtung zwischen dem ersten und dem zweiten Sensor.

Weitere bevorzugte Ausführungsformen gehen aus den abhängigen Patentansprüchen hervor.

## KURZE BESCHREIBUNG DER ZEICHNUNGEN

Im folgenden wird der Erfindungsgegenstand anhand eines bevorzugten Ausführungsbeispiels, welches in den beiliegenden Zeichnungen dargestellt ist, näher erläutert. Es zeigen jeweils schematisch:

Figur 1     eine Seitenansicht eines Winkelmessgerätes mit Achslagesensoren;
Figur 2     eine Detailansicht von Achslagesensoren; und
Figur 3     eine elektronische Schaltung zur Auswertung von Kapazitätswerten der Achslagesensoren.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

## WEGE ZUR AUSFÜHRUNG DER ERFINDUNG

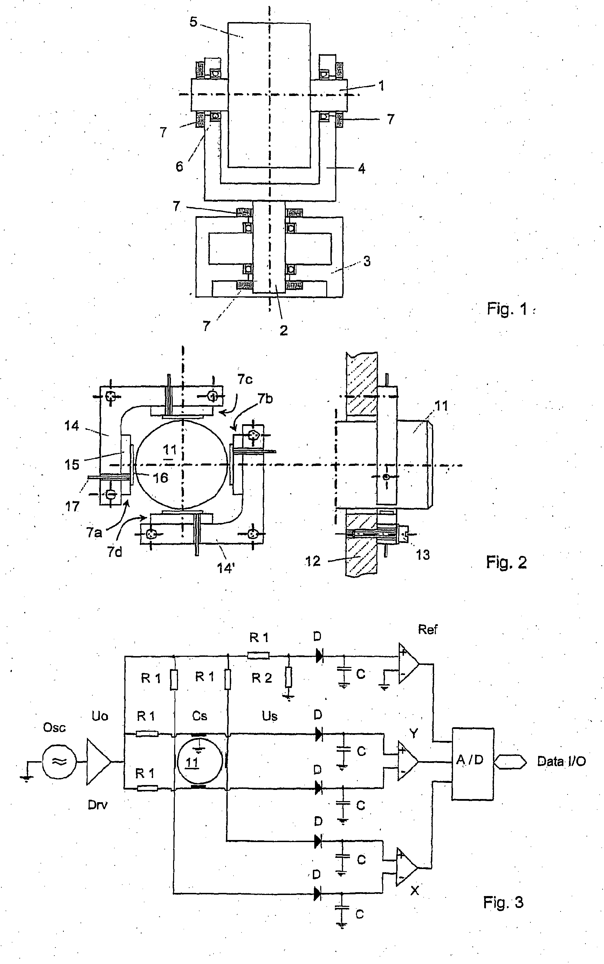

**Figur 1** zeigt eine Seitenansicht eines Winkelmessgerätes mit Achslagesensoren. Dabei ist ein Fernrohrkörper 5 um eine Kippachse 1 drehbar in einer Stütze 4 gelagert. Die Stütze 4 ist um eine Stehachse 2 drehbar in einer Basis 3 gelagert. Die Lagerung weist jeweils Kugellager 6 auf. Die beiden Achsen 1, 2 sind jeweils mit kapazitiven Sensoren 7 ausgestattet, welche paarweise oder einzeln, in Achsrichtung voneinander beabstandet angeordnet sind. Vorzugsweise sind die Sensoren 7 jeweils bei den Lagern 6 der Achsen 1, 2 angeordnet. Über die Kapazitätsänderungen der Sensoren 7 werden die lateralen Abweichungen der Achse gemessen und in eine Winkelkorrektur der Achslage umgerechnet. Die Winkelmesser oder Winkelencoder zur Messung des Drehwinkels um die entsprechenden Achsen, sowie eventuelle motorische Achsantriebe sind nicht eingezeichnet.

**Figur 2** zeigt eine Detailansicht von Achslagesensoren. Die linke Seite der Figur zeigt eine Aufsicht in Achsrichtung, und die rechte Seite einen Querschnitt, wobei die Achsrichtung in der Papierebene liegt. Auf einem Grundträger 12 (nur im Querschnitt dargestellt), welcher Teil der Stütze 4 oder der Basis 3 ist, sind zwei Sensorelement-Träger 14, 14' mit Befestigungsmitteln wie beispielsweise Schrauben 13 befestigt. Diese Befestigung ist verstellbar, so dass die Abstände zwischen den Sensoren 7 und der Achse 11 eingestellt werden können. Dabei bildet der Luftspalt zwischen der Achse 11 und einer Elektrode 16 eines Sensors 7 eine Kapazität. Der Abstand von Elektrode 16 zur Achse 11 wird jeweils über eine Verschiebung des Trägers 14 auf beispielsweise ca. 15 Mikrometer eingestellt. Bei einem Achsendurchmesser von 28mm ergibt sich bei einer Elektrodenbreite von 3mm und einer Länge von 10mm eine Grundkapazität von ca. 3-4 pF.

Die Achse 11 kann die Kippachse 1 oder die Stehachse 2 sein. Jeder der Sensoren 7a, 7b, 7c, 7d weist eine Elektrode 16 auf, die über einen Isolator 15 isoliert am Sensorelement-Träger 14 befestigt ist und über eine Elektrodenanschlussleitung 17 elektrisch mit einer Auswerteelektronik verbunden ist. Der Isolator 15 ist aus Gründen der mechanischen Genauigkeit und Beständigkeit vorzugsweise aus einem keramischen Material. Die Achse 11 ist elektrisch mit einem Masseanschluss der Auswerteelektronik verbunden.

Bei einer Messung der Winkelstellung einer Achse mittels einer 4-fachen Kreisablesung respektive eines vierfach-Sensors kann diese Art Winkelmessung auch Informationen über die Verschiebung der Achse liefern, und dient also ebenfalls als Sensoranordnung für diesen Zweck. In diesem Fall ist nur noch eine zusätzliche, in Achsrichtung beabstandete kapazitive Sensoranordnung der obigen Art erforderlich, um die Lage der Achse vollständig zu bestimmen.

**Figur 3** zeigt eine elektronische Schaltung zur Auswertung von Kapazitätswerten der Achslagesensoren. Vorzugsweise weist die elektronische Schaltung für jeweils einen der Sensoren 7a, 7b, 7c, 7d zur Bildung eines ersten respektive eines zweiten Signals einen Spannungsteiler auf, bestehend aus einem Widerstand R1 und der variablen Kapazität Cs des Sensors. Dabei ist insbesondere der Widerstand R1 zwischen einer Spannungsquelle mit einer Spannung Uo und einem Abgriff des Spannungsteilers mit einer Spannung Us angeordnet. Die Kapazität des Sensors 7a, 7b, 7c, 7d ist zwischen dem Abgriff des Spannungsteilers und der Achse 1, 2; 11 angeordnet. Zur Gleichrichtung und Glättung des Signals Us am Abgriff des Spannungsteilers ist eine Diode D in Serie zwischen dem Abgriff des Spannungsteilers und einem Verstärkereingang, sowie ein Glättungskondensator C zwischen dem Verstärkereingang und Masse angeordnet. Vorzugsweise sind die beiden Dioden D von jeweils zwei Sensoren eines Sensorpaares gepaart, das heisst im gleichen Diodengehäuse angeordnet.

Die beiden geglätteten Signale eines Sensorpaares werden auf die beiden Eingänge eines Differentialverstärkers X, Y geführt. Das Ausgangssignal des Differentialverstärkers X, Y ist ein Mass für die Abweichung der Achse in X respektive Y-Richtung aus der Mitte des Sensors. Durch das Differentialverfahren werden Temperatureffekte klein gehalten. Die Ausgänge der beiden Differentialverstärker X, Y werden durch einen A/D-Wandler digitalisiert und digital durch einen Systemcontroller weiterverarbeitet. Natürlich kann die Schnittstelle zwischen analoger und digitaler Signalverarbeitung auch an einer anderen Stelle der Schaltungsanordnung realisiert werden, bei gleicher Gesamtfunktion. Die Schaltung zur Bestimmung einer Achsverschiebung kann auch rein analog implementiert werden.

Die Spannungsquelle weist einen Oszillator Osc und einen Treiber Drv auf. Ein sinusförmiges Signal der Frequenz f, beispielsweise ca. 1.5MHz, des Oszillators Osc wird durch den Treiber Drv verstärkt auf eine Spannung Uo von beispielsweise ca. 2Vpp. Die Widerstände R1 bilden mit der Kapazität Cs der Sensorelektrode einen Spannungsteiler. An der Diode D wird die resultierende Spannung Us am Abgriff des Spannungsteilers

$$Us = U_0 \frac{\dfrac{1}{j2\pi f C_s}}{R_1 + \dfrac{1}{j2\pi f C_s}}$$

gleichgerichtet und in C geglättet.

Bei einer Sensorempfindlichkeit von ca. 100mV/mikrometern, und einem Rauschen von ca. 1mV ergibt sich eine Auflösung von 10-20nm. Bei Sensorabständen entsprechend einem Lagerabstand von 150mm ergibt dies eine Winkelempfindlichkeit bezüglich der Verdrehung der Achse 11 (um eine Achse senkrecht zur Achse 11) von ca. 0.1 mikrorad.

Vorzugsweise weist die elektronische Schaltung eine Kompensationsschaltung zur Elimination von Temperatureinflüssen auf, insbesondere einen Spannungsteiler R1-R2 und eine Schaltung zur Gleichrichtung und Glättung, die analog zu den Schaltungen der jeweils einzelnen Sensoren 7a, 7b, 7c, 7d aufgebaut ist. Damit wird eine Referenzspannung erzeugt, die auch über den A/D-Wandler digitalisiert wird. Der Einfluss einer variierenden Signalamplitude Uo wird so ausgeschaltet, indem die Messignale der Sensorpaare auf die Referenzspannung bezogen werden.

**BEZUGSZEICHENLISTE**

| | | | |
|---|---|---|---|
| 1 | Kippachse | 11 | Achse |
| 2 | Stehachse | 12 | Grundträger |
| 3 | Basis | 13 | Befestigung, Schraube |
| 4 | Stütze | 14 | Sensorelement-Träger |
| 5 | Fernrohrkörper | 15 | Isolator |
| 6 | Kugellager | 16 | Elektrode |
| 7, 7a ...7d | Sensoren | 17 | Elektrodenanschlussleitung |

**Patentansprüche**

**1.** Winkelmessgerät zur optischen Winkelmessung, aufweisend einen um mindestens eine Achse (1, 2; 11) drehbar gelagerten Fernrohrkörper 5 wobei die Achse (1, 2; 11) an mindestens zwei Lagerstellen 6 drehbar gelagert ist, und die Lagerstellen 6 in Richtung der Achse (1, 2; 11) voneinander beabstandet sind,
**dadurch gekennzeichnet,**
**dass** mindestens zwei Sensoranordnungen zur Erfassung der Lage der Achse (1, 2; 11) jeweils an einer Messstelle entlang der Achse (1, 2; 11) angeordnet sind, wobei die Messstellen in Richtung der Achse (1, 2; 11) voneinander beabstandet sind, mindestens eine der Sensoranordnungen eine Gruppe von kapazitiven Sensoren (7a, 7b, 7c, 7d) aufweist, welche an der Messstelle eine Verschiebung der Achse (1, 2; 11) in Richtungen senkrecht zur Achsrichtung erfasst.

2. Winkelmessgerät gemäss Anspruch 1, in welchem jede der mindestens einen Sensoranordnungen ein erstes Sensorpaar (7a, 7b) und ein zweites Sensorpaar (7c, 7d) mit jeweils zwei kapazitiven Sensoren aufweist, wobei das erste Sensorpaar (7a, 7b) eine Verschiebung der Achse (1, 2; 11) in eine erste Richtung orthogonal zur Achsrichtung misst, das zweite Sensorpaar (7c, 7d) eine Verschiebung der Achse (1, 2; 11) in eine zweite Richtung orthogonal zur Achsrichtung misst, und die erste und die zweite Richtung im wesentlichen orthogonal zueinander sind.

3. Winkelmessgerät gemäss Anspruch 2, in welchem in mindestens einer der Sensoranordnungen jeweils ein erster Sensor (7a) des ersten Sensorpaares (7a, 7b) und ein erster Sensor (7c) des zweiten Sensorpaares auf einem ersten Sensorelement-Träger (14) angeordnet sind, und jeweils ein zweiter Sensor (7b) des ersten Sensorpaares und ein zweiter Sensor (7d) des zweiten Sensorpaares auf einem zweiten Sensorelement-Träger (14') angeordnet sind.

4. Winkelmessgerät gemäss einem der vorangehenden Ansprüche, in welchem die Sensoren jeweils zwischen der Achse (1, 2; 11) und einer Elektrode (16) eine Kapazität nach Massgabe des Abstandes zwischen der Achse (1, 2; 11) und der Elektrode (16) bilden.

5. Winkelmessgerät gemäss einem der vorangehenden Ansprüche, in welchem die Achse (1, 2; 11) eine Kippachse (1) und/oder eine Stehachse (2) ist.

6. Winkelmessgerät gemäss einem der vorangehenden Ansprüche, aufweisend eine elektronische Schaltung, welche für mindestens eines der Sensorpaare (7a, 7b; 7c, 7d) zur Erzeugung eines ersten Signals nach Massgabe der Kapazität des ersten Sensors (7a, 7c) und eines zweiten Signals nach Massgabe der Kapazität des zweiten Sensors (7b, 7d), sowie zur Bildung eines Differenzsignals aus dem ersten und dem zweiten Signal ausgebildet ist.

7. Winkelmessgerät gemäss Anspruch 6, in welchem die elektronische Schaltung für jeweils einen der Sensoren (7a, 7b, 7c, 7d) zur Bildung des ersten respektive des zweiten Signals einen Spannungsteiler (R1, Cs) aufweist, bestehend aus einem Widerstand (R1) und der Kapazität (Cs) des Sensors, wobei insbesondere der Widerstand (R1) zwischen einer Spannungsquelle (Ose, Drv) und einem Abgriff des Spannungsteilers angeordnet ist, und die Kapazität (Cs) des Sensors (7a, 7b, 7c, 7d) zwischen dem Abgriff und der Achse (1, 2; 11) angeordnet ist.

8. Winkelmessgerät gemäss Anspruch 7, in welchem die elektronische Schaltung eine Schaltung zur Gleichrichtung und Glättung des Signals am Abgriff des Spannungsteilers, insbesondere eine Diode (D) in Serie mit dem Signal und einen Glätfungskondensator (C) gegen Masse aufweist.

9. Winkelmessgerät gemäss Anspruch 8, in welchem die beiden Dioden (D) von jeweils zwei Sensoren eines Sensorpaares (7a, 7b; 7c, 7d) im gleichen Diodengehäuse angeordnet sind.

10. Winkelmessgerät gemäss einem der Ansprüche 6 bis 9, in welchem die elektronische Schaltung eine Kompensationsschaltung zur Elimination von Temperatureinflüssen aufweist, insbesondere einen Spannungsteiler und eine Schaltung zur Gleichrichtung und Glättung, die analog zu den Schaltungen der jeweils einzelnen Sensoren (7a, 7b, 7c, 7d) aufgebaut ist.

**Claims**

1. Angle measuring device for optical angle measurement comprising a telescope body (5) mounted rotatably about at least one spindle (1, 2; 11) wherein the spindle (1, 2; 11) is mounted rotatably at at least two bearing locations (6) and the bearing locations (6) are spaced apart from one another in the direction of the spindle (1, 2; 11),
**characterized**

**in that** at least two sensor arrangements for detecting the position of the spindle (1, 2; 11) are in each case arranged at a measuring location along the spindle (1, 2; 11) wherein the measuring locations are spaced apart from one another in the direction of the spindle (1, 2; 11), and at least one of the sensor arrangements comprises a group of capacitive sensors (7a, 7b, 7c, 7d) which detects a displacement of the spindle (1, 2; 11) in directions perpendicular to the axial direction at the measuring location.

2. Angle measuring device according to Claim 1, wherein each of the at least one sensor arrangement comprises a first sensor pair (7a, 7b) and a second sensor pair (7c, 7d) having two capacitive sensors in each case, wherein the first sensor pair (7a, 7b) measures a displacement of the spindle (1, 2; 11) in a first direction orthogonal to the axial direction, the second sensor pair (7c, 7d) measures a displacement of the spindle (1, 2; 11) in a second direction orthogonal to the axial direction, and the first and second directions are substantially orthogonal to one another.

3. Angle measuring device according to Claim 2, wherein in at least one of the sensor arrangements in each case a first sensor (7a) of the first sensor pair (7a, 7b) and a first sensor (7c) of the second sensor pair are arranged on a first sensor element carrier (14), and in each case a second sensor (7b) of the first sensor pair and a second sensor (7d) of the second sensor pair are arranged on a second sensor element carrier (14').

4. Angle measuring device according to any one of the preceding claims, wherein the sensors in each case between the spindle (1, 2; 11) and an electrode (16) form a capacitance according to the distance between the spindle (1, 2; 11) and the electrode (16).

5. Angle measuring device according to any one of the preceding claims, wherein the spindle (1, 2; 11) is a tilting spindle (1) and/or a vertical spindle (2).

6. Angle measuring device according to any one of the preceding claims, comprising an electronic circuit which, for at least one of the sensor pairs (7a, 7b; 7c, 7d) is designed for generating a first signal according to the capacitance of the first sensor (7a, 7c) and a second signal according to the capacitance of the second sensor (7b, 7d) and for forming a difference signal from the first and second signals.

7. Angle measuring device according to Claim 6, wherein the electronic circuit comprises for a respective one of the sensors (7a, 7b, 7c, 7d) for forming the first and respectively the second signal a voltage divider (R1, Cs) consisting of a resistor (R1) and the capacitance (Cs) of the sensor, wherein in particular the resistor (R1) is arranged between a voltage source (Osc, Drv) and a tap of the voltage divider, and the capacitance (Cs) of the sensor (7a, 7b, 7c, 7d) is arranged between the tap and the spindle (1, 2; 11).

8. Angle measuring device according to Claim 7, wherein the electronic circuit comprises a circuit for rectifying and smoothing the signal at the tap of the voltage divider, in particular a diode (D) in series with the signal and a smoothing capacitor (C) with respect to earth.

9. Angle measuring device according to Claim 8, wherein the two diodes (D) of in each case two sensors of a sensor pair (7a, 7b; 7c, 7d) are arranged in the same diode housing.

10. Angle measuring device according to any one of Claims 6 to 9, wherein the electronic circuit comprises a compensation circuit for eliminating temperature influences, in particular a voltage divider and a circuit for rectifying and smoothing, which is constructed analogously to the circuits of the respective individual sensors (7a, 7b, 7c, 7d).

**Revendications**

1. Rapporteur d'angle pour la mesure d'angle optique qui présente un corps de lunette de visée (5) positionné rotatif autour d'au moins un axe (1, 2 ; 11), l'axe (1, 2 ; 11) étant positionné rotatif à au moins deux endroits de palier (6) et les endroits de palier (6) étant espacés l'un de l'autre en direction de l'axe (1, 2 ; 11), **caractérisé en ce qu'**au moins deux dispositifs de capteurs pour la détection de la position de l'axe (1, 2 ; 11) sont placés respectivement à un endroit de mesure le long de l'axe (1, 2 ; 11), les endroits de mesure étant espacés l'un de l'autre en direction de l'axe (1, 2 ; 11), au moins l'un des dispositifs de capteurs présente un groupe de capteurs capacitifs (7a, 7b, 7c, 7d) qui comprend, à l'endroit de mesure, un déplacement de l'axe (1, 2 ; 11) dans des directions perpendiculairement à la direction de l'axe.

**2.** Rapporteur d'angle selon la revendication 1 dans lequel chacun des dispositifs de capteurs qui existe au moins présente une première paire de capteurs (7a, 7b) et une seconde paire de capteurs (7c, 7d) avec chacune deux capteurs capacitifs, la première paire de capteurs (7a, 7b) mesurant un déplacement de l'axe (1, 2 ; 11) dans une direction orthogonale par rapport à la direction de l'axe, la seconde paire de capteurs (7c, 7d) mesurant un déplacement de l'axe (1, 2 ; 11) dans une seconde direction orthogonale par rapport à la direction de l'axe et la première et la seconde direction étant substantiellement orthogonales l'une par rapport à l'autre.

**3.** Rapporteur d'angle selon la revendication 2 dans lequel respectivement un premier capteur (7a) de la première paire de capteurs (7a, 7b) et un premier capteur (7c) de la seconde paire de capteurs sont placés dans au moins l'un des dispositifs de capteurs sur un premier support d'élément capteur (14) et respectivement un second capteur (7b) de la première paire de capteurs et un second capteur (7d) de la seconde paire de capteurs sont placés sur un second support d'élément capteur (14').

**4.** Rapporteur d'angle selon l'une des revendications précédentes dans lequel les capteurs forment respectivement entre l'axe (1, 2 ; 11) et une électrode (16) une capacitance selon la distance entre l'axe (1, 2 ; 11) et l'électrode (16).

**5.** Rapporteur d'angle selon l'une des revendications précédentes dans lequel l'axe (1, 2 ; 11) est un axe de basculement (1) et/ou un axe vertical (2).

**6.** Rapporteur d'angle selon l'une des revendications précédentes présentant un circuit électronique qui est configuré pour au moins l'une des paires de capteurs (7a, 7b ; 7c, 7d) pour générer un premier signal selon la capacitance du premier capteur (7a, 7b) et un second signal selon la capacitance du second capteur (7b, 7d) ainsi que pour former un signal de différence entre le premier et le second signal.

**7.** Rapporteur d'angle selon la revendication 6 dans lequel le circuit électronique pour respectivement l'un des capteurs (7a, 7b ; 7c, 7d) pour former respectivement le premier ou le second signal présente un diviseur de tension (R1, Cs) composé d'une résistance (R1) et de la capacitance (Cs) du capteur, cependant qu'en particulier la résistance (R1) est placée entre une source de tension (Ose, Drv) et une prise du diviseur de tension et la capacitance (Cs) du capteur (7a, 7b ; 7c, 7d) est placée entre la prise et l'axe (1, 2 ; 11).

**8.** Rapporteur d'angle selon la revendication 7 dans lequel le circuit électronique présente un circuit pour le redressement et le lissage du signal à la prise du diviseur de tension, en particulier une diode (D) en série avec le signal et un condensateur de lissage (C) à la masse.

**9.** Rapporteur d'angle selon la revendication 8 dans lequel les deux diodes (D) de respectivement deux capteurs d'une paire de capteurs (7a, 7b ; 7c, 7d) sont placés dans le même boîtier de diodes.

**10.** Rapporteur d'angle selon l'une des revendications 6 à 9 dans lequel le circuit électronique présente un circuit de compensation pour l'élimination des influences de température, en particulier un diviseur de tension et un circuit pour le redressement et le lissage qui est constitué de manière analogue aux circuits des différents capteurs respectifs (7a, 7b, 7c, 7d).

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0369416 A
- US 4455758 A